# EUROPEAN PATENT APPLICATION

(11) **EP 4 632 840 A1**
(43) Date of publication of application: **15.10.2025**
(21) Application number: 23899880.1
(22) Date of filing: 30.11.2023
(51) Int. Cl.: H01M 4/36, H01M 4/62, H01M 10/0525

(54) **NANO-SILICON-CARBON COMPOSITE MATERIAL, AND PREPARATION METHOD THEREFOR AND USE THEREOF**

(30) Priority: 08.12.2022 CN 202211570400
(71) Applicant: Lanxi Zhide Advanced Materials Co., Ltd., Jinhua, Zhejiang 321100 (CN)
(72) Inventor: CHEN, Qinghua, Jinhua, Zhejiang 321100 (CN); LIU, Ruifang, Jinhua, Zhejiang 321100 (CN); FANG, Bing, Jinhua, Zhejiang 321100 (CN)
(74) Representative: Novagraaf Technologies
(86) International application number: PCT/CN2023/135603
(87) International publication number: WO 2024/120302

(57) **Abstract**

Provides are a nano-silicon-carbon composite material, and a preparation method and application thereof. The nano-silicon-carbon composite material includes silicon nanoparticles, closed pores, and a turbostratic graphite three-dimensional network structure; the closed pores have a pore volume inaccessible to N₂, and the closed pores includes closed micropores; the turbostratic graphite three-dimensional network structure includes ultra-large interlayer spacing turbostratic graphite, and an interlayer spacing of the ultra-large interlayer spacing turbostratic graphite is 0.40 to 0.55nm; and the silicon nanoparticles and the closed pores are dispersed in the turbostratic graphite three-dimensional network structure. The nano-silicon-carbon composite material effectively alleviates the volume expansion of silicon in a charge-discharge cycle, thereby improving the cycling stability of an electrode, and shows excellent electrochemical performance when applied to a lithium ion secondary battery.

## Description

This application is based upon and claims priority to Chinese Patent Application No. 202211570400.7 filed on December 8, 2022, the disclosure of which is hereby incorporated by reference in its entirety.

### Technical Field

The present disclosure belongs to the technical field of batteries, and specifically relates to a nano-silicon-carbon composite material, and a preparation method and application thereof.

### Background

Silicon has a very high theoretical specific capacity, Li₁₅Si₄ alloy may be formed under room temperature conditions, and a theoretical capacity reaches 3579mAh/g, such that the silicon is expected to replace a traditional graphite negative electrode as the next generation of high specific energy lithium ion battery negative electrode material.

As the lithium ion battery negative electrode material, the silicon has two problems: the conductivity of the silicon is poor, which may be solved by various methods such as carbon carriers, carbon doping, carbon coating, and the like; and next, the silicon may generate huge volume expansion or volume shrinkage during lithium intercalation or lithium deintercalation, leading to destruction of electrode structure, attenuation of battery capacity, and reduction of cycle efficiency.

In recent years, by optimizing the size and distribution of silicon particles and modulating the structure of a negative electrode material, the volume expansion of a silicon-based negative electrode material, such as a silicon oxygen negative electrode material and a silicon carbon negative electrode material, has been greatly reduced. However, such improvement is not enough for practical applications.

### Summary

The present disclosure is mainly intended to provide a nano-silicon-carbon composite material, and a preparation method and application thereof, so as to effectively alleviate large volume expansion of silicon in a nano-silicon-carbon composite material, thereby solving the problem of poor cycling stability of a silicon carbon composite material in the prior art.

In order to implement the above objective, an aspect of the present disclosure provides a nano-silicon-carbon composite material. The nano-silicon-carbon composite material includes silicon nanoparticles, closed pores, and a turbostratic graphite three-dimensional network structure; the closed pores have a pore volume inaccessible to N₂, and the closed pores include closed micropores; the turbostratic graphite three-dimensional network structure includes ultra-large interlayer spacing turbostratic graphite, and an interlayer spacing of the ultra-large interlayer spacing turbostratic graphite is 0.40 to 0.55nm; and the silicon nanoparticles and the closed pores are dispersed in the turbostratic graphite three-dimensional network structure.

Another aspect of the present disclosure provides a method for preparing a nano-silicon-carbon composite material. The preparation method specifically includes: S1, a porous carbon skeleton is provided, wherein the porous carbon skeleton is a three-dimensional network structure that is formed by a turbostratic graphite structure, closed micropores are included, the porous carbon skeleton includes ultra-large interlayer spacing turbostratic graphite, and an interlayer spacing of the ultra-large interlayer spacing turbostratic graphite is 0.40 to 0.55nm; S2, the porous carbon skeleton in the S1 is in contact with a silicon-containing precursor at 200 to 1000°C for 0.1 to 100h, a cooling is performed, and then a crushing and/or grading treatment is performed on an obtained material, so as to obtain the nano-silicon-carbon composite material.

Another aspect of the present disclosure provides a negative electrode. The negative electrode includes the above nano-silicon-carbon composite material or a nano-silicon-carbon composite material obtained by the above preparation method.

Another aspect of the present disclosure provides a battery. The battery includes a positive electrode and a negative electrode; the negative electrode includes the above nano-silicon-carbon composite material or a nano-silicon-carbon composite material obtained by the above preparation method; and preferably, the battery is a lithium ion secondary battery.

The present disclosure has the following beneficial effects by adopting the technical solutions.

For the problem of volume expansion of an electrode material caused by silicon-intercalated lithium in a silicon-carbon composite material, resulting in poor cycling stability, the present disclosure provides the nano-silicon-carbon composite material, including the silicon nanoparticles, the closed pores, and the turbostratic graphite three-dimensional network structure.

First, the turbostratic graphite three-dimensional network structure in the nano-silicon-carbon composite material includes a graphite layer with a layer spacing ranging from 0.40nm to 0.55nm. The layer spacing of the ultra-large interlayer spacing turbostratic graphite may dynamically store lithium ions, and a long-term cycle mechanism of dynamic lithium storage-lithium releasing is provided during a charge-discharge cycle of a lithium ion battery, thereby improving the cycling stability of an electrode.

The closed pores in the nano-silicon-carbon composite material include the closed micropores, and the closed pores with the size may also dynamically store the lithium ions during the charge-discharge cycle, thereby improving the cycling stability of the electrode.

Secondly, the turbostratic graphite structure may absorb the volume expansion of the silicon nanoparticles during the charge-discharge cycle, so as to reduce damage to the structure of the composite material by silicon-intercalated lithium, thereby improving the cycling stability of the electrode. The closed pores in the nano-silicon-carbon composite material may also provide an elastic space for volume expansion of silicon-intercalated lithium in the nano-silicon-carbon composite material, thereby improving the cycling stability of the electrode.

Furthermore, silicon and carbon in the nano-silicon-carbon composite material are uniformly dispersed at nanometer scale. The silicon nanoparticles are dispersed in the turbostratic graphite three-dimensional network structure at nanometer scale such as 2nm or even a smaller size. The small-size silicon particle effectively alleviates uneven deformation inside the particle caused by a lithium silicon alloying reaction, such that structure collapse of the composite material caused by silicon particle rupture after a plurality of charge-discharge cycles is avoided, thereby improving the cycling stability of the composite material electrode.

### Brief Description of the Drawings

The drawings, which form a part of the present disclosure, are used to provide a further understanding of the present disclosure. The exemplary embodiments of the present disclosure and the description thereof are used to explain the present disclosure, but do not constitute improper limitations to the present disclosure. In the drawings:
Fig. 1 is an X-Ray Diffraction (XRD) diagram of the nano-silicon-carbon composite material obtained in Embodiment 1.
Fig. 2 shows a N₂ adsorption isotherm of the nano-silicon-carbon composite material obtained in Embodiment 1 and the material after crushing.
Fig. 3 is a High Resolution Transmission Electron Microscope (HRTEM) diagram of the nano-silicon-carbon composite material obtained in Embodiment 1.
Fig. 4 is an example of a method for calculating the volume proportion of an ultra-large interlayer spacing turbostratic graphite.
Fig. 5 is a Raman diagram of the nano-silicon-carbon composite material obtained in Embodiment 1.
Fig. 6 is a Scanning Electron Microscope (SEM) diagram of the nano-silicon-carbon composite material obtained in Embodiment 1.
Fig. 7 is an SEM-Energy Dispersive Spectrometer (EDS) mapping of the nano-silicon-carbon composite material obtained in Embodiment 1.
Fig. 8 shows cycling performance test results of a full battery including an electrode of a nano-silicon-carbon composite material obtained in Embodiment 1 and a full battery including an electrode of a nano-silicon-carbon composite material obtained in Comparative Example 1.

### Detailed Description of the Embodiments

It is to be noted that the embodiments in the present disclosure and the features in the embodiments may be combined with one another without conflict. The present disclosure will be described below in detail with reference to the drawings and the embodiments.

### I, Nano-Silicon-Carbon Composite Material

A typical implementation of the present disclosure provides a nano-silicon-carbon composite material. The nano-silicon-carbon composite material includes silicon nanoparticles, closed pores, and a turbostratic graphite three-dimensional network structure; the closed pores have a pore volume inaccessible to N₂, and the closed pores include closed micropores; the turbostratic graphite three-dimensional network structure includes ultra-large interlayer spacing turbostratic graphite, and an interlayer spacing of the ultra-large interlayer spacing turbostratic graphite is 0.40 to 0.55nm; and the silicon nanoparticles and the closed pores are dispersed in the turbostratic graphite three-dimensional network structure.

The turbostratic graphite three-dimensional network structure is generally formed during preparation of a carbon material. Open and/or closed micropores (pore diameter less than 2nm) and mesopores (pore diameter of 2 to 50nm) are left due to the random and unordered stacking of turbostratic graphite. Surfaces of the open pores are surfaces of in-situ deposition of the silicon nanoparticles; and the open pores are filled by the silicon nanoparticles after deposition is completed, and new closed pores are formed therein during deposition. Therefore, in the present disclosure, the silicon nanoparticles and the closed pores are dispersed in the turbostratic graphite three-dimensional network structure. The presence of the turbostratic graphite and the closed pores may alleviate a volume effect of the silicon nanoparticles, such that the expansion of the nano-silicon-carbon composite material during lithium intercalation is reduced, the rupture of the silicon nanoparticles is avoided, the structural stability of the composite material is improved, and the composite material electrode shows better cycling stability. More importantly, the ultra-large interlayer spacing turbostratic graphite and the closed micropores have certain dynamic lithium storage properties, which may repeat lithium storage-lithium releasing in an electrochemical cycle, so as to provide a long-lasting lithium storage mechanism, which is manifested by the emergence of 1 to 2 cycles every 5 to 10 cycles, and the cycling efficiency of a battery is greater than 100%, such that the cycling stability of the battery is further improved.

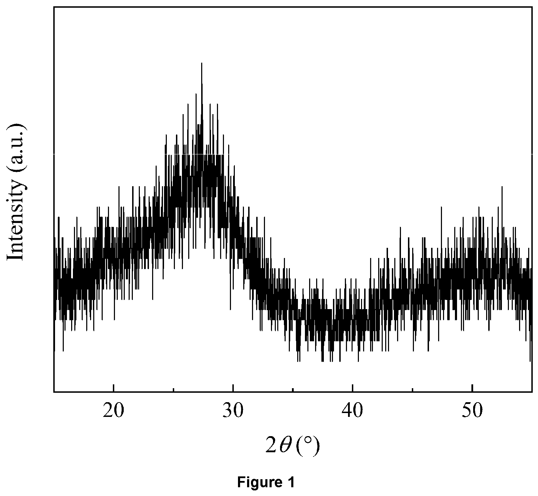

The silicon nanoparticles are silicon nanoparticles in the in-situ formation of the turbostratic graphite three-dimensional network structure, and is different from a silicon particle with sub-micrometer scale (approximately 100nm) that is obtained by means of crushing, grinding, or other milling of the silicon particles in the prior art; and the silicon nanoparticles formed in-situ have a much smaller size, which is less than 20nm; preferably less than 5nm; and more preferably, less than 2nm, and is typically amorphous. As reflected in XRD results, the nano-silicon-carbon composite material provided in the present disclosure shows a wider peak (Fig. 1) without a distinct crystallization peak in a Si crystallization peak position (2θ = 28.4°). The in-situ formed silicon nanoparticle is dispersed in the turbostratic graphite three-dimensional network structure, and form a uniform mixture at nanometer scale with the carbon material of the turbostratic graphite three-dimensional network structure. If the silicon nanoparticles are smaller, it is more conductive to preventing uneven deformation inside the particle from generating irreversible damage to a silicon particle structure, and when the silicon nanoparticles is uniformly dispersed in the turbostratic graphite three-dimensional network structure, the ultra-large interlayer spacing turbostratic graphite and the closed pores may provide certain buffer for volume expansion during silicon-intercalated lithium.

The closed pores are a pore inaccessible to N₂, and include external open pores inaccessible to N₂, and pores that are present in the nano-silicon-carbon composite material particle and isolated from surfaces of the particles; and the latter may also be referred to as inner pores. The open pores correspond to the closed pores. In the present disclosure, the open pores refer to a pore which is accessible to N₂. A pore that is inaccessible to N₂, communicates with the surface, and has an extremely-small size only accessible to He is treated as the closed hole in the present disclosure.

Due to the presence of an ultra-large interlayer spacing and the closed pores in the nano-silicon-carbon composite material, a skeletal density is necessarily less than a theoretical density of non-porous pure silicon and pure carbon materials (e.g., graphite). A volume of the inner pores closed in the material may be calculated by the skeletal density and the theoretical density. A skeletal density of a material is generally obtained by a helium specific gravity method, and herein, the skeletal density of the material obtained by the helium specific gravity method is referred to as a true density of the material.

Detection of the inner pores is reversely calculated by the true density of the composite material obtained by the helium specific gravity method. When the true density of the material is less than a true density of a fully-compacted material with the same elemental composition, it indicates that there are inner pores, and the volume of the inner pores is a reciprocal (closed pore volume + dense volume) of the true density of the composite material minus a reciprocal (dense volume) of the true density of the fully-compacted material with the same elemental composition. Size information cannot be obtained based on the closed-pore volume obtained by testing the true density.

With respect to the analysis of the size of the pores inside the particle, a cross section of the particle may be observed. The nano-silicon-carbon composite material particle is cut to expose the internal cross section of the particle; the presence of the pores may be observed under an SEM at high magnification; these pores are usually disconnected from each other, or may also have a communication phenomenon among a small number of pores, but all of them are encapsulated inside the particle; and these pores are the inner pores. Micropores (pore width less than 2nm) within the cross section are difficult to observe clearly due to the small size. Furthermore, the observation of the cross-sectional morphology is difficult to obtain quantitative information, and is also affected by a cutting surface and a cutting effect, thus leading to uncertainty.

In order to obtain detailed information about the closed pores distribution of the composite material, the present disclosure proposes that pore distribution may be tested by gas adsorption after certain treatments of the composite material, and the information about the closed pores distribution information is obtained by comparing results of the pore distribution before and after treatments. Gas adsorption methods commonly-used such as N₂ adsorption and desorption may detect the volume of the open pores accessible to N₂, which is generally referred to as the pore volume. However, the volume inaccessible to N₂ and the volume of the inner pores closed inside the material cannot be detected. Crushing, grinding and crushing or other crushing methods of the nano-silicon-carbon composite material particle may expose the closed pores closed inside the particle, so as to become new open pores, which may be detected by the N₂ adsorption method, and the volume of the newly added pores is the volume of the closed pores. Theoretically, the volume of the closed pores detected at this portion is less than or equal to the actual volume of the closed pores. According to N₂ adsorption test results, a total pore volume of the material may be obtained, and the pore distribution of the material is analyzed. Generally, analysis is performed by using a t method, and the volume of the micropores and the volume of the mesopores may be obtained. According to the N₂ adsorption test results before and after crushing of the nano-silicon-carbon composite material, the volumes of the micropores and mesopores before and after the crushing of the material may be obtained, thereby obtaining information about the closed micropores and the closed mesopores.

It is to be noted that, the above volume of the inner pores calculated according to the true density by the helium specific gravity method includes or is greater than the volume of the closed pores obtained by crushing the material followed by a N₂ adsorption test as mentioned in the present disclosure, as some of the smaller pores in the volume of the inner pores exposed after crushing may be inaccessible to larger N₂ molecules.

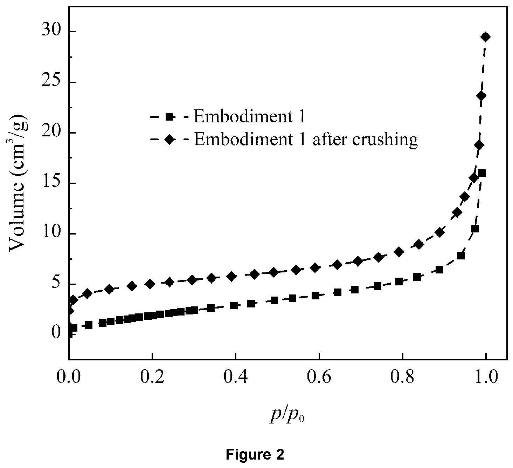

In the present disclosure, a 20MPa crushing treatment is performed on the nano-silicon-carbon composite material at 20MPa for 3min, the N₂ adsorption test is performed on the obtained powder, and it is found that both the specific surface area and pore volume of the crushed material are increased compared to an untreated material. Fig. 2 shows a N₂ adsorption isotherm of the nano-silicon-carbon composite material in Embodiment 1 and a material after a crushing treatment. It may be seen that both the specific surface area and pore volume of the material are increased; before the nano-silicon-carbon composite material is crushed, there are no micropores filling shown in the N₂ adsorption isotherm, but after crushing, significant micropores filling appear, and thus there are closed micropores in the composite material. According to the adsorption isotherm, the volumes of the open pores of the composite material and the crushed material are calculated to be 0.025cm³/g and 0.046cm³/g, respectively. According to t method calculation results of the adsorption isotherm, the volumes of the open micropores of the composite material and the crushed material are calculated to be 0 and 0.004cm³/g, respectively. Therefore, the volume of the closed micropores in the composite material is 0.004cm³/g.

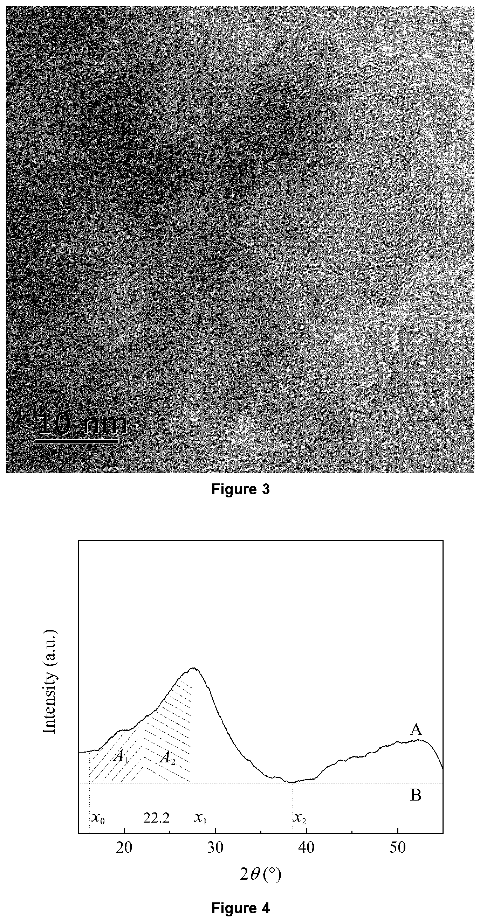

The turbostratic graphite three-dimensional network structure refers to a three-dimensional spatial network structure that is formed by turbostratic graphite layers. An HRTEM may observe irregular lattice fringes of turbostratic graphite carbon. Generally, an interlayer spacing of the turbostratic graphite structure is 0.34 to 0.40nm. The nano-silicon-carbon composite material provided in the present disclosure includes the ultra-large interlayer spacing turbostratic graphite, the ultra-large interlayer spacing turbostratic graphite refers to turbostratic graphite with an interlayer spacing of a graphite-like layer within a range of 0.40 to 0.55nm. Fig. 3 shows an HRTEM picture of the nano-silicon-carbon composite material provided in the present disclosure. Irregular lattice fringes with a spacing of 0.40 to 0.50nm and winding like earthworms may be observed, that is, there is a turbostratic graphite layer structure with an ultra-large interlayer spacing. The interlayer spacing of the turbostratic graphite three-dimensional network structure in the nano-silicon-carbon composite material may have a wide range, such as 0.34 to 0.41nm, 0.34 to 0.42nm, 0.34 to 0.45nm, 0.34 to 0.47nm, 0.34 to 0.50nm, 0.34 to 0.55nm, 0.35 to 0.55nm, 0.37 to 0.55nm, 0.38 to 0.55nm, 0.35 to 0.45nm, 0.35 to 0.50nm, 0.36 to 0.48nm, 0.36 to 0.53nm, 0.37 to 0.47nm, 0.37 to 0.52nm, 0.38 to 0.54nm, or the like, where the graphite-like layer with the interlayer spacing of 0.40nm and above is the ultra-large interlayer spacing turbostratic graphite in the present disclosure. In some embodiments, the interlayer spacing of the ultra-large interlayer spacing turbostratic graphite in the nano-silicon-carbon composite material may includes, but is not limited to, be 0.40 to 0.42nm, 0.40 to 0.43nm, 0.40 to 0.45nm, 0.40 to 0.46nm, 0.40 to 0.49nm, 0.40 to 0.51nm, 0.40 to 0.53nm, 0.40 to 0.54nm, or the like.

TEM can only observe localized information and cannot obtain statistical information about the entire material, and the latter being reflected by XRD analysis. The turbostratic graphite structure is formed by stacking the graphite-like layers, but there is some degree of being ordered in a short range and disordered in a long range. For a long-range ordered graphite layer structure, a sharp diffraction peak may be observed at 2*θ*=26.4° by using XRD, reflecting an ordered structure of graphite in a c-axis direction, with an interlayer spacing of a corresponding carbon hexahedron being *d*₀₀₂=0.337nm; and the turbostratic graphite structure is disordered in a carbon long range, and shows a wide peak within a range of 2*θ*=15° to 38°, and a peak is located at 2*θ*=23.0° to 26.6°. Crystalline silicon has a characteristic peak at 2*θ*=28.4°. The nano-silicon-carbon composite material in the present disclosure exists in the form of nanoparticles with a small size and close to amorphous, which also forms a widened peak at this position, such that the diffraction peak of the turbostratic graphite carbon overlaps with the diffraction peak of the silicon nanoparticles, and its XRD curve (Fig. 1) shows a widened peak within the range of 2*θ*=15° to 38°, with a peak value being 2*θ*≥27.0°, which makes it more difficult to analyze silicon and carbon separately.

By carefully analyzing the XRD results and electrochemical properties of different samples, the inventors found that the cycling stability of the nano-silicon-carbon composite material as a negative electrode active ingredient in the application of lithium ion batteries has a high correlation with the relative strength of the XRD results in the range of 2*θ*=16.1° to 22.2°; and if the relative strength of the region is higher, the cycling stability of the battery is better. For a carbon material, diffraction in the range of 2*θ*=16.1° to 22.2° corresponds to an interlayer spacing of *d*₀₀₂=0.40nm to 0.55nm, that is, the above ultra-large interlayer spacing. Therefore, the present disclosure provides a semi-quantitative method based on the XRD results, so as to calculate a volume content of the ultra-large interlayer spacing turbostratic graphite in the nano-silicon-carbon composite material. The content is determined by the relative strength in the XRD curve of the composite material in the range of 2*θ*=16.1° to 22.2°, and then, it is found that the cycling stability of a battery including a negative electrode of the nano-silicon-carbon composite material is positively correlated with the content of the ultra-large interlayer spacing turbostratic graphite.

By using the nano-silicon-carbon composite material in Embodiment 1 as an example, as shown in Fig. 4, a diffraction curve A is a spectral line of the XRD curve of the composite material after a smoothing treatment, with a peak point being 2*θ*=x₁°≥27.0°, a peak starting point (low-angle peak valley) 2*θ*=*x*₀° being located in a range of 2*θ*=15°~22°, and a peak ending point (high-angle peak valley) *2θ=x*₂° being located in a range of 2*θ*=35°~40°. If x₀°≤16.1°, let x₀°=16.1°, a straight line B passing through a peak valley position 2*θ = x*₂° and parallel to an x-axis is a background line; and an integral *A*₁ of 2*θ*=*x*₀~22.2° corresponds to the ultra-large interlayer spacing turbostratic graphite with *d*₀₀₂≥0.40nm, an integral *A*₂ of 2*θ*=22.2~*x*₁° corresponds to ordinary turbostratic graphite with *d*₀₀₂≤ 0.40nm, and an integral *A₀=A₁+A₂* of the curve of *2θ=x₀-x*₁° is a total amount of carbon in the turbostratic graphite three-dimensional network structure. *A*₁/*A*₀ is the volume proportion of ultra-large interlayer spacing turbostratic graphite in the turbostratic graphite three-dimensional network structure.

To sum up, the nano-silicon-carbon composite material provided in the present disclosure includes the silicon nanoparticles, the closed pores, and the turbostratic graphite three-dimensional network structure; the closed pores include the closed micropores; and the turbostratic graphite three-dimensional network structure includes the ultra-large interlayer spacing turbostratic graphite with the interlayer spacing being 0.40 to 0.55nm. The silicon nanoparticles and the closed pores are dispersed in the turbostratic graphite three-dimensional network structure; and the silicon and the carbon in the nano-silicon-carbon composite material are uniformly dispersed at nanometer scale. The silicon nanoparticles and the closed pores are dispersed in the turbostratic graphite three-dimensional network structure. The presence of the turbostratic graphite and the closed pores may alleviate a volume effect of the silicon nanoparticles, such that the expansion of the nano-silicon-carbon composite material during lithium intercalation is reduced, the rupture of the silicon nanoparticles is avoided, the structural stability of the composite material is improved, and the composite material electrode shows better cycling stability. More importantly, the ultra-large interlayer spacing turbostratic graphite and the closed micropores have certain dynamic lithium storage properties, which may repeat lithium storage-lithium releasing in an electrochemical cycle, so as to provide a long-lasting lithium storage mechanism, thereby improving the cycling stability of a battery.

A theoretical density of a pure silicon material is 2.33g/cm³, and a theoretical density of graphite, which has no specific value due to the spacing of carbon layers, is 2.09 to 2.33g/cm³. The carbon material in the nano-silicon-carbon composite material is the turbostratic graphite three-dimensional network structure, and its theoretical density is taken to be 2.09g/cm³, then the theoretical density of 50%C + 50%Si is assumed to be 2.21g/cm³. In some embodiments, the nano-silicon-carbon composite material has a true density of 1.2 to 2.1g/cm³ obtained by the helium specific gravity method. Accordingly, the volume of the inner pores may be calculated to be 0.02 to 0.38cm³/g. Compared with other ranges, by limiting the true density of the nano-silicon-carbon composite material with the above range, a more adequate buffer space is provided for lithium intercalation expansion of silicon, such that the structural stability of the material is improved, thereby improving the cycling stability of a lithium secondary battery. When the true density is too small (i.e., the volume of the inner pores is too large), the nano-silicon-carbon composite material includes more pores. Although the pores may provide a buffer space for the lithium intercalation expansion of the silicon, during preparation of an electrode plate, too many pores are easy to lead to the crushing of the electrode plate during rolling, resulting in an increase in the specific surface area or the silicon separated from an electrical contact, and a reduction in the initial coulombic efficiency of the battery; or it is difficult to achieve a compaction density, and the volume energy density of the material is reduced, limiting its application.

In order to further improve the structural stability of the material, so as to further improve the cycling stability of the lithium secondary battery, preferably, the true density of the nano-silicon-carbon composite material is 1.2 to 1.3g/cm³, 1.3 to 1.4g/cm³, 1.4 to 1.5g/cm³, 1.5 to 1.6g/cm³, 1.6 to 1.7g/cm³, 1.7 to 1.8g/cm³, 1.8 to 1.9g/cm³, 1.9 to 2.0g/cm³, or 2.0 to 2.1g/cm³.

In some embodiments, the nano-silicon-carbon composite material includes SiO*ₓ*, where x is 0 to 2. During the preparation of the nano-silicon-carbon composite material, an oxygen treatment may be introduced at different steps, so as to form the SiO*ₓ* in the composite material. The introduction of the SiO*ₓ* is conducive to reducing stress changes caused by silicon-intercalated lithium expansion and lithium deintercalation contraction, such that the structural strength of the material is improved, thereby facilitating the improvement of the cycling stability of the material in the lithium ion battery.

In some embodiments, a size of the silicon nanoparticles is 0.5 to 20nm, preferably 0.5 to 2nm. The silicon nanoparticles needs to have a smaller size to better alleviate stress concentration caused by lithium intercalation expansion and the resulting problems of silicon particle pulverization, repeated SEI regeneration, etc. For example, the size of the silicon nanoparticles may be 0.5 to 10nm, 0.5 to 5nm, 3 to 5nm, 1.5 to 2.5nm, 1 to 3nm, or the like. In some embodiments, the silicon nanoparticles are amorphous silicon.

The turbostratic graphite may provide a buffer space for the volume expansion of the silicon, facilitating the alleviating of the volume expansion and contraction of the silicon during lithium intercalation or lithium deintercalation; the ultra-large interlayer spacing turbostratic graphite has the property of dynamic lithium storage-lithium releasing, such that a long-lasting lithium storage mechanism is provided, thereby further improving the cycling stability of the composite material. However, in another aspect, the excessive content of the ultra-large interlayer spacing turbostratic graphite leads to an increase in volume and a reduction in structural stability of the composite material, resulting in a reduction in battery performance, such that the ultra-large interlayer spacing content needs to be controlled within a certain range. In some embodiments, a volume content of the ultra-large interlayer spacing turbostratic graphite in the turbostratic graphite three-dimensional network structure is 10% to 50%, that is, *A*₁/*A*₀ is 10% to 50%. For example, *A*₁/*A*₀ may be, but is not limited to, 13%, 15%, 17%, 20%, 25%, 30%, 35%, 40%, 45%, 48%, or the like. In some embodiments, *A*₁/*A*₀ may be 11% to 16%, 12% to 22%, 15% to 35%, 24% to 38%, 26% to 42%, 32% to 48%, 39% to 49%, or the like.

A stacking size *L*_{c} of the ultra-large interlayer spacing turbostratic graphite in a c-axis direction and a size *L*ₐ in an *a*-axis direction are important parameters to characterize the turbostratic graphite structure. If the sizes are greater, the orderliness of the turbostratic graphite is higher, this is not beneficial to facilitating the effect of the turbostratic graphite in buffering silicon-intercalated lithium expansion. In some embodiments, the stacking size *L*_{c} of the ultra-large interlayer spacing turbostratic graphite in the c-axis direction is 0.4 to 2nm. That is, the number of stacked layers of the graphite-like layers in the ultra-large interlayer spacing turbostratic graphite in the c-axis direction may be 1, 2, 3, or 4 layers. The above selection of the number of stacked layers is related to the interlayer spacing of the graphite-like layers stacked to form the turbostratic graphite. In some embodiments, the size *L*ₐ of the ultra-large interlayer spacing turbostratic graphite in the *a*-axis direction is 2 to 10nm. For example, *L*ₐ may, but is not limited to, be 2.1nm, 2.5nm, 2.7nm, 3nm, 3.2nm, 3.5nm, 4nm, 4.5nm, 5nm, 5.5nm, 6nm, 8nm, 9nm, or the like. In some embodiments, *L*ₐ may be 2 to 4nm, 3.5 to 5.5nm, 5 to 8nm, 7 to 10nm, or the like.

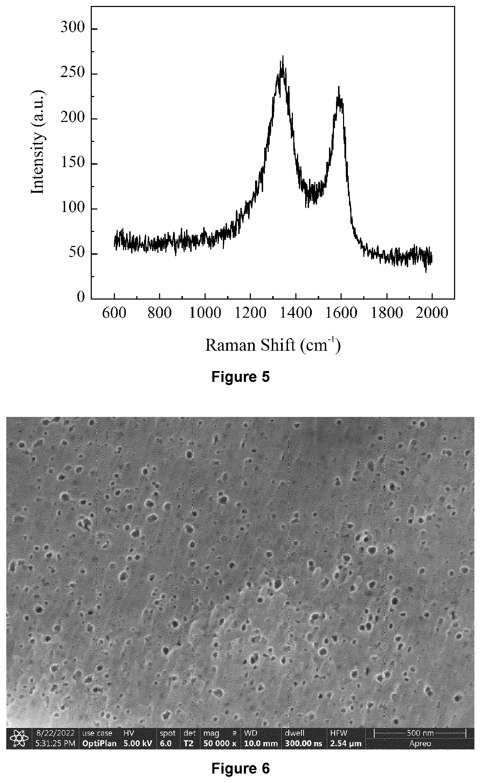

*I*_{D}/*I*_{G} in Raman spectrum test (Raman) results is generally used to represent a disordering degree of the carbon material. As mentioned above, if the disordering degree of the graphite-like layer in the nano-silicon-carbon composite material is higher, the effect of buffering silicon-intercalated lithium expansion is stronger. In a Raman spectrum curve of the carbon material, there are two characteristic peaks, one peak located between 1310cm⁻¹ and 1360cm⁻¹ is a disordered peak (D peak), and another peak located between 1560cm⁻¹ and 1610cm⁻¹ is a graphite peak (G peak). The disordered degree or graphitization degree of the carbon material may be characterized by an integral area ratio (*I*_{D}/*I*_{G}) of the D peak to the G peak. If *I*_{D}/*I*_{G} is smaller, it indicates that the disordered degree is lower, and the graphitization degree is higher. Fig. 5 is Raman spectrum test results of a nano composite material in Embodiment 1. In some embodiments, the turbostratic graphite three-dimensional network structure in the nano-silicon-carbon composite material has a high disordering degree, and by using a Raman test method, the *I*_{D}/*I_{G}* of the nano-silicon-carbon composite material is 0.5 to 5.0; preferably, the *I*_{D}/*I*_{G} of the nano-silicon-carbon composite material is 1.0 to 2.0. In some other embodiments, the *I*_{D}/*I*_{G} of the nano-silicon-carbon composite material may be 0.5 to 0.95, 0.6 to 1.2, 1.0 to 1.5, 1.8 to 2.5, 2.0 to 2.8, 2.5 to 3.3, 3.3 to 5.0, 3.5 to 5.0, or 4.0 to 5.0, or the like.

In some embodiments, a specific surface area of the nano-silicon-carbon composite material is 0.1 to 50m²/g, a volume of open pores is 0.001 to 0.05cm³/g, and the volume of open pores is a pore volume accessible to N₂. In some other embodiments, the specific surface area of the composite material may be 0.2 to 48m²/g, 0.15 to 19m²/g, 1.2 to 18m²/g, 0.15 to 14m²/g, 1.3 to 13m²/g, 0.15 to 9.8m²/g, 1.1 to 4.9m²/g, 5.1 to 9.9m²/g, 16 to 19m²/g, 0.5 to 30m²/g, 7 to 25m²/g, 24 to 45m²/g, 40 to 50m²/g, or the like; and the volume of open pores of the composite material may be 0.002 to 0.048cm³/g, 0.005 to 0.045cm³/g, 0.0015 to 0.03cm³/g, 0.001 to 0.01cm³/g, 0.005 to 0.02cm³/g, 0.015 to 0.035cm³/g, 0.025 to 0.04cm³/g, 0.03 to 0.045cm³/g, or 0.04 to 0.05cm³/g, or the like.

In some embodiments, in the nano-silicon-carbon composite material, a ratio of the pore volume of the closed pores to the volume of the open pores is 0.1 to 5. In some other embodiments, the ratio of the volume of the closed pores in the nano-silicon-carbon composite material to the volume of the open pores may be 0.1 to 0.9, 0.5 to 1, 1 to 3, 2.5 to 3.5, 3 to 4.5, 4 to 5, or the like. In some implementations, closed pores volume of the nano-silicon-carbon composite material is 0.0001 to 0.25cm³/g. In some other embodiments, the closed pores volume of the nano-silicon to carbon composite material may be 0.0001 to 0.0012cm³/g, 0.0003 to 0.0025cm³/g, 0.0014 to 0.0074cm³/g, 0.005 to 0.015cm³/g, 0.0001 to 0.01cm³/g, 0.012 to 0.03cm³/g, 0.025 to 0.04cm³/g, 0.03 to 0.045cm³/g, 0.008 to 0.047cm³/g, 0.0005 to 0.048cm³/g, 0.0001 to 0.0499cm³/g, 0.052 to 0.082cm³/g, 0.06 to 0.1cm³/g, 0.075 to 0.15cm³/g, 0.13 to 0.2cm³/g, 0.2 to 0.25cm³/g, or the like.

In some embodiments, the composite material further includes closed mesopores. In the present disclosure, a cross section is obtained by performing an Ar ion polishing treatment on the nano-silicon-carbon composite material, and field emission electron microscope observation (Fig. 6) is performed, and it is found that there are 10 to 50nm pores in the cross section of the material, and thus the material has the closed mesopores. A ratio of a volume of the closed micropores in the closed pores to a volume of the closed mesopores is 0.05 to 5. From the N₂ adsorption isotherm of the nano-silicon-carbon composite material in Embodiment 1 and the material after the crushing treatment (Fig. 2), it may be seen that, there added pores filling phenomenon after the crushing treatment, and mesoporous adsorption is also significantly increased, that is, there are closed micropores and closed mesopores in the composite material. According to the adsorption isotherm and the results of the t method, the volumes of the open mesopores of the composite material and the crushed material are calculated to be 0.025cm³/g and 0.042cm³/g, respectively. Therefore, the volumes of the closed micropores and closed mesopores in the composite material are 0.004cm³/g and 0.017cm³/g, respectively, and a volume ratio of the closed micropores to the closed mesopores is 0.24. In some other embodiments, a ratio of the pore volume of the closed micropores in the closed pores to the volume of the closed mesopores may be 0.05 to 0.1, 0.1 to 0.3, 0.25 to 0.5, 0.3 to 0.8, 0.5 to 0.9, 0.8 to 1, 1 to 3, 2.5 to 3.5, 3 to 4.5, 4 to 5, or the like.

As mentioned above, the closed pores are present in the nano-silicon-carbon composite material, and the closed pores may provide a buffer for the volume expansion of the silicon-intercalated lithium. The closed pores include the closed micropores and the closed mesopores. The closed pores with the size being 0.4 to 0.8nm may dynamically store lithium ions during a charge-discharge cycle, thereby improving the cycling stability of an electrode. In the present disclosure, a N₂ adsorption and desorption test is performed on the composite material and samples after a 20MPa crushing treatment of the composite material, and in combination of N₂ adsorption and desorption test results and t method analysis, the content of the open pores and closed pores in the material, as well as the content of the micropores and mesopores in the open pores and closed pores, are calculated. In some embodiments, the volume of the closed micropores of the nano-silicon-carbon composite material is 0.00005 to 0.21cm³/g, and the volume of the closed mesopores of the nano-silicon-carbon composite material is 0.00017 to 0.24cm³/g. In some other embodiments, the volume of the closed micropores of the nano-silicon-carbon composite material may be 0.00005 to 0.00015cm³/g, 0.00012 to 0.00035cm³/g, 0.0003 to 0.0007cm³/g, 0.0005 to 0.001cm³/g, 0.001 to 0.003cm³/g, 0.0025 to 0.0065cm³/g, 0.006 to 0.009cm³/g, 0.008 to 0.02cm³/g, 0.015 to 0.035cm³/g, 0.03 to 0.07cm³/g, 0.06 to 0.1cm³/g, 0.09 to 0.14cm³/g, 0.13 to 0.18cm³/g, 0.15 to 0.21cm³/g, or the like; the volume of the closed mesopores of the nano-silicon-carbon composite material may be 0.00017 to 0.00035cm³/g, 0.00019 to 0.0004cm³/g, 0.00034 to 0.00068cm³/g, 0.00065 to 0.001cm³/g, 0.0009 to 0.002cm³/g, 0.0018 to 0.005cm³/g, 0.0045 to 0.009cm³/g, 0.008 to 0.024cm³/g, 0.01 to 0.035cm³/g, 0.02 to 0.048cm³/g, 0.047 to 0.075cm³/g, 0.07 to 0.1cm³/g, 0.09 to 0.15cm³/g, 0.12 to 0.18cm³/g, 0.15 to 0.23cm³/g, 0.20 to 0.24cm³/g, or the like.

In some embodiments, a content of silicon in the nano-silicon-carbon composite material is 5 to 95wt%. For example, the content of the silicon in the nano-silicon-carbon composite material may, but is not limited to, be 35wt%, 50wt%, 55wt%, 60wt%, 65wt%, 70wt%, or the like. In some other embodiments, the content of the silicon in the nano-silicon-carbon composite material may be 10 to 80wt%, 5 to 20wt%, 15 to 45wt%, 30 to 75wt%, 60 to 80wt%, 75 to 90wt%, or the like.

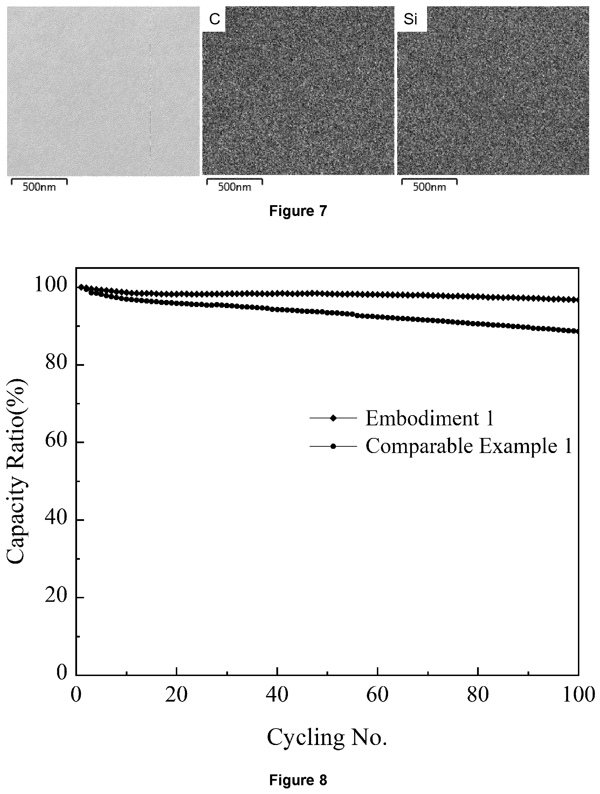

In some embodiments, the silicon and the carbon in the nano-silicon-carbon composite material are uniformly dispersed at nanometer scale. Fig. 7 shows an SEM-EDS picture of the cross section of the nano-silicon-carbon composite material in Embodiment 1 after Ar ion polishing. It may be seen that, the carbon and the silicon inside the particle are uniformly distributed at nanometer scale.

In some embodiments, the silicon nanoparticles are obtained through chemical vapor deposition of a silicon-containing precursor on the turbostratic graphite three-dimensional network structure at 150 to 1000°C. Preferably, the silicon-containing precursor includes, but is not limited to, one or more of monosilane, disilane, trisilane, halogenated silane, polysilane, silole and a derivative thereof, and silafluorene and a derivative thereof.

The turbostratic graphite three-dimensional network structure is derived from a carbon material, and the type and treatment method of the carbon material or carbon precursor largely affect the turbostratic graphite three-dimensional network structure, the volumes of open pores and closed pores of the carbon material, and distribution of the open pores and closed pores. The open pores of the carbon material dominated by the turbostratic graphite three-dimensional network structure is a place of chemical vapor deposition of the silicon-containing precursor, at the same time, its pore-channel structure and size limit the silicon nanoparticles within a small-size range, and the deposition of the silicon-containing precursor also forms new closed pores. The turbostratic graphite three-dimensional network structure, the silicon nanoparticles, and the closed pores are three basic components of the nano-silicon-carbon composite material in the present disclosure, all of which are directly or indirectly closely related to the carbon material. In some embodiments, the turbostratic graphite three-dimensional network structure is derived from a carbon material, and the carbon material includes, but is not limited to: hard carbon, graphite, amorphous carbon, graphene, a carbon material prepared by a polymer precursor through pyrolysis and/or activation, a carbon material prepared by a biomass precursor through pyrolysis and/or activation, and a carbon material prepared by a fossil carbon source through pyrolysis and/or activation.

By doping the carbon precursor and then carbonizing same, activating the carbon material, or doping the carbon precursor and then carbonizing and activating same, an interlayer spacing of a hard carbon turbostratic graphite layer may be further increased, and the pore volume of the carbon material may also be increased, including the volume of open pores and the closed pores volume. In some embodiments, the carbon material for preparing the turbostratic graphite three-dimensional network structure includes one or more of N, P, S, and B, typically, for example, N-doped porous carbon skeleton, P-doped porous carbon skeleton, N/P co-doped porous carbon skeleton, and the like. In some other embodiments, the carbon material for preparing the turbostratic graphite three-dimensional network structure includes one or more of metal elements such as Na, K, Mg, Ca, Al, Ti, Cr, Mn, Fe, Co, Ni, Cu, Zn, Ga, Ge, and the like. In some other embodiments, the carbon material for preparing the turbostratic graphite three-dimensional network structure includes one or more of the elements N, P, S, B, Na, K, Mg, Ca, Al, Ti, Cr, Mn, Fe, Co, Ni, Cu, Zn, Ga, Ge, and the like. In some embodiments, the turbostratic graphite three-dimensional network structure is obtained after activation of the carbon material, and an activation method includes, but is not limited to: the carbon material is in contact with one or more of H₂O, CO₂, O₂, and O₃ at a high temperature, and/or the carbon material is mixed with one or more of NaOH, KOH, Na₂CO₃, K₂CO₃, potassium acetate, Na₂O, K₂O, Na₂O₂, K₂O₂, Na₂O, K₂O, H₃PO₄, and ZnCl₂, and then a high-temperature treatment is performed in an inert gas.

In some embodiments, the nano-silicon-carbon composite material includes a surface coating layer, and the surface coating layer may further improve the electrochemical performance of the nano-silicon-carbon composite material. A thickness of the surface coating layer is 0.2 to 500nm. For example, the thickness of the surface coating layer may, but is not limited to, 0.5nm, 5nm, 10nm, 20nm, 30nm, 50nm, 100nm, 150nm, 200nm, 250nm, 300nm, 400nm, or the like. In some embodiments, the thickness of the surface coating layer may be 0.2 to 20nm, 10 to 100nm, 100 to 300nm, 200 to 500nm, or the like. A material of the surface coating layer includes, but is not limited to, one or several of a solid electrolyte, a conducting polymer, a carbonaceous material, metal, alloy, and a metallic oxide. In some embodiments, the surface coating layer includes, but is not limited to, one or more of lithium hydroxide, lithium carbonate, lithium fluoride, lithium phosphate, lithium metaphosphate, aluminum dihydrogen phosphate, lithium metaaluminate, lithium aluminum phosphate, aluminum phosphate, aluminum metaphosphate, aluminum oxide, aluminum oxide monohydrate, aluminum oxide trihydrate, aluminum hydroxide, alumina sol, aluminium isopropoxide, magnesium oxide, magnesium hydroxide, zinc oxide, zinc hydroxide, titanium oxide, zirconium oxide, lithium phosphorus oxynitride (LiPON), lithium lanthanum zirconium oxide (LLZO), lithium aluminum titanium phosphate (LATP), lithium lanthanum titanium oxide (LLTO), and a lithium germanium phosphorus sulfur compound; and/or one or more of polymers such as polyethylene oxide, carboxymethyl cellulose, polyacrylic acid, and polyacrylonitrile, and lithium complex thereof; and one or more of LISICON-type solid electrolyte, NASICION-type solid electrolyte, perovskite-type solid electrolyte, garnet-type solid electrolyte, and sulfide solid electrolyte.

In some embodiments, a median particle size *d*₅₀ of the nano-silicon-carbon composite material is 2 to 20µm, preferably, the median particle size *d*₅₀ of the nano-silicon-carbon composite material is 4 to 12µm; more preferably, the median particle size *d*₅₀ of the nano-silicon-carbon composite material is 8 to 12µm. For example, the median particle size *d*₅₀ of the nano-silicon-carbon composite material may, but is not limited to, be 3 to 5µm, 6 to 7µm, 8 to 10µm, 10 to 12µm, 9.5 to 10.5µm, 10 to 11µm, or the like. In some embodiments, a minimum particle size *d*ₘᵢₙ of the nano-silicon-carbon composite material is 0.1 to 5µm, preferably, the minimum particle size *d*ₘᵢₙ of the nano-silicon-carbon composite material is 0.4 to 4µm. For example, the minimum particle size *d*ₘᵢₙ of the nano-silicon-carbon composite material may, but is not limited to, be 0.3 to 0.5µm, 0.5 to 1.5µm, 1 to 3µm, 2.5 to 3.5µm, 3.5 to 4.5µm, or the like. In some embodiments, a maximum particle size *d*ₘₐₓ of the nano-silicon-carbon composite material is 15 to 50µm, preferably, the maximum particle size *d*ₘₐₓ of the nano-silicon-carbon composite material is 20 to 40µm. For example, the maximum particle size *d*ₘₐₓ of the nano-silicon-carbon composite material may, but is not limited to, be 18 to 22µm, 20 to 30µm, 25 to 35µm, 30 to 40µm, 40 to 45µm, or the like.

### II, Method for Preparing Nano-Silicon-Carbon Composite Material

Another typical implementation of the present disclosure provides a method for preparing a nano-silicon-carbon composite material. The preparation method specifically includes: S1, a porous carbon skeleton is provided, where the porous carbon skeleton is a three-dimensional network structure that is formed by a turbostratic graphite structure, closed micropores is included, the porous carbon skeleton includes ultra-large interlayer spacing turbostratic graphite, and an interlayer spacing of the ultra-large interlayer spacing turbostratic graphite is 0.40 to 0.55nm; S2, the porous carbon skeleton in the S1 is in contact with a silicon-containing precursor at 200 to 1000°C for 0.1 to 100h, cooling is performed, and then a crushing and/or a grading treatment is performed on an obtained material, so as to obtain a nano-silicon-carbon composite material.

In some embodiments, the porous carbon skeleton in the S1 may be obtained by a carbon precursor through pyrolysis and/or activation. The carbon precursor includes one or more of a polymer precursor, a biomass precursor, and a fossil carbon source. For example, the carbon precursor may be, but is not limited to, one or more of glucose, sucrose, maltose, lactose, cyclodextrin, starch, glycogen, cellulose, hemicellulose, lignin, epoxy resin, thermoplastic phenolic resin, thermosetting phenolic resin, polyacetal resin, urea-formaldehyde resin, furfural resin, furfuryl ketone resin, acrylic resin, coconut shell, rice husk, and wood. In some embodiments, a pyrolysis temperature is 600 to 1800°C, and a pyrolysis time is 0.5 to 10h. The pyrolysis temperature and the pyrolysis time may be varied. For example, the pyrolysis temperature may be 650 to 950°C, 900 to 1100°C, 1050 to 1250°C , 1200 to 1400°C , 1350 to 1550°C , 1500 to 1750°C , or the like; the pyrolysis time may be 1 to 2h, 1.5 to 3h, 2 to 5h, 4 to 8h, 5 to 10h, or the like.

Doping modification of the carbon material may modify the internal and surface structures of the carbon material, and the interlayer spacing and disordered degree the turbostratic graphite three-dimensional network structure in porous carbon through appropriate control. In some embodiments, one or more miscellaneous elements may be introduced in the porous carbon skeleton in the S1, and the miscellaneous elements are one or more of elements such as N, P, S, B, and the like. In some other embodiments, the miscellaneous element includes one or more of metal elements such as Na, K, Mg, Ca, Al, Ti, Cr, Mn, Fe, Co, Ni, Cu, Zn, Ga, Ge, and the like. In some other embodiments, the miscellaneous element includes one or more of the elements N, P, S, B, Na, K, Mg, Ca, Al, Ti, Cr, Mn, Fe, Co, Ni, Cu, Zn, Ga, Ge, and the like. The doping method may use technical means commonly used in the art, and is not described again in the present disclosure.

Activation may further increase the interlayer spacing and disordered degree of the turbostratic graphite. More importantly, the pore volume and specific surface area of the carbon material may be increased, and subsequent deposition of the silicon-containing precursor is facilitated, so as to form the silicon nanoparticles and reach an appropriate silicon deposition amount. An activation method includes, but is not limited to: the carbon material is in contact with one or more of H₂O, CO₂, O₂, and O₃ at a high temperature, and/or the carbon material is mixed with one or more of NaOH, KOH, Na₂CO₃, K₂CO₃, potassium acetate, Na₂O, K₂O, Na₂O₂, K₂O₂, Na₂O, K₂O, H₃PO₄, and ZnCl₂, and then a high-temperature treatment is performed in an inert gas, where the high-temperature treatment is maintained for 0.5 to 30h at 600 to 1500°C. The temperature and time during the high-temperature treatment may be varied. For example, the temperature for the high-temperature treatment may be 650 to 750°C, 700 to 800°C, 750 to 950°C, 900 to 1000°C, 950 to 1200°C, 1150 to 1350°C, 1300 to 1450°C, or the like; and the time for the high to temperature treatment may be 1 to 3h, 2 to 5h, 5 to 10h, 8 to 20h, 15 to 25h, or the like.

The porous carbon skeleton should have an appropriate particle size; if the particle size is too small, the porous carbon skeleton is easily blown away by gas flow during chemical vapor deposition in the S2, resulting in a reduced utilization of the porous carbon skeleton; and if the particle size is too large, the contact efficiency of the porous carbon skeleton with the silicon-containing precursor decreases during chemical vapor deposition, thus affecting the effective deposition of silicon particles. In some embodiments, a median particle size *d*₅₀ of the porous carbon skeleton is 2 to 100µm, and a maximum particle size *d*ₘₐₓ is less than 200µm. Preferably, the median particle size *d*₅₀ of the porous carbon skeleton is 5 to 30µm, and the maximum particle size *d*ₘₐₓ is less than 200µm. The median particle size *d*₅₀ of the porous carbon skeleton may be, for example, 5-10µm, 7 to 15µm, 10 to 20µm, 15 to 25µm, 20 to 30µm, or the like; and the maximum particle size *d*ₘₐₓ of the porous carbon skeleton may be, for example, less than 190µm, less than 180µm, less than 150µm, less than 100µm, less than 70µm, less than 50µm, or the like. In the present disclosure, a shape of the porous carbon skeleton is not limited, for example, may be, but is not limited to, spherical, ellipsoidal, or the like.

The porous carbon skeleton shall have a large specific surface area and abundant pore structure to provide a site and a space for deposition of the silicon nanoparticles. The specific surface area and pore distribution of the porous carbon skeleton directly affect silicon deposition effect, thus affecting the specific surface area of the composite material as well as the size of the silicon nanoparticles in the composite material. In some embodiments, a specific surface area of the porous carbon skeleton is 100 to 3500m²/g, and a pore volume is 0.1 to 3.0cm³/g. Preferably, the specific surface area of the porous carbon skeleton is 400 to 2500m²/g. The pore volume is 0.3 to 1.5cm³/g. For example, the specific surface area of the porous carbon skeleton may, but is not limited to, be 420m²/g, 450m²/g, 500m²/g, 600m²/g, 800m²/g, 1000m²/g, 1300m²/g, 1500m²/g, 1800m²/g, 2000m²/g, 2200m²/g, 2400m²/g, 2450m²/g, or a range consisting of any two of these values; and the pore volume of the porous carbon skeleton may, but is not limited to, be 0.35cm³/g, 0.4cm³/g, 0.6cm³/g, 0.8cm³/g, 1.0cm³/g, 1.2cm³/g, 1.4cm³/g, 1.45cm³/g, or a range consisting of any two of these values. In some embodiments, the porous carbon skeleton includes micropores, mesopores, and macropores, of which pore volume respectively is 30% to 98%, 1% to 50%, and 1% to 20% of a total pore volume.

In the S2, the silicon-containing precursor is in contact with the porous carbon skeleton obtained in the S1 at a certain temperature, and chemical vapor deposition of the silicon-containing precursor is performed on the porous carbon skeleton. As is known by those skilled in the art, the gas including the silicon-containing precursor in the S2 also includes an inert gas. In some embodiments, the silicon-containing precursor in the S2 includes, but is not limited to, one or more of monosilane, disilane, trisilane, halogenated silane, polysilane, silole and a derivative thereof, and silafluorene and a derivative thereof; and the inert gas includes, but is not limited to, one or more of N₂, Ar, and He. In some embodiments, a volume content of the silicon-containing precursor in a mixed gas of the silicon-containing precursor and the inert gas is 1% to 50%. For example, the volume content of the silicon-containing precursor in the mixed gas of the silicon-containing precursor and the inert gas may be, but is not limited to, 1%, 5%, 10%, 15%, 20%, 30%, 40%, 50%, or a range consisting of any two of these values.

In some embodiments, a reactor for performing a chemical vapor deposition reaction is any one or a combination of a rotary furnace, a ladle furnace, a liner furnace, a roller kiln, a pusher kiln, an atmospheric box furnace, and a tube furnace; and a solid-gas phase contact method during chemical vapor deposition is any one or a combination of a fixed bed, a moving bed, a fluidized bed, and a boiling bed.

In some embodiments, the silicon-containing precursor is in contact with the porous carbon skeleton obtained in the S2 at 200 to 1000°C for 0.1 to 100h. A deposition temperature may be, but is not limited to, 250°C, 300°C, 400°C, 500°C, 600°C, 700°C, 800°C, 900°C, or the like; and a deposition time may be, but is not limited to, 0.5h, 1h, 2h, 5h, 8h, 10h, 15h, 20h, 25h, 30h, 40h, 50h, 60h, 80h, 100h, or the like. An appropriate deposition time is related to the deposition temperature; if the temperature is higher, a chemical vapor deposition rate of the silicon is faster; then if the deposition time is too long, the silicon particles are easy to aggregate and grow up on an outer surface of the porous carbon skeleton; a large volume effect of the composite material electrode during a charge-discharge cycle is easily caused due to the larger silicon particles, resulting in a reduction in the cycling performance of the battery. When silicon deposition is performed under a low-temperature condition, the deposition rate is slow, the silicon-containing precursor is low in utilization, and the shorter deposition time may lead to too low silicon loading, making it difficult to obtain a composite material with a higher gram capacity. Therefore, an appropriate deposition time shall be selected based on the temperature for chemical vapor deposition in the S2.

The manner of crushing the material obtained in the S2 includes, but is not limited to, a combination of one or more of manual grinding, mechanical grinding, ball milling, and airflow milling. In some embodiments, a median particle size *d*₅₀ of the nano-silicon-carbon composite material obtained after the crushing and/or grading treatment is 2 to 20µm. Preferably, a minimum particle size *d*ₘᵢₙ of the nano-silicon-carbon composite material is 0.1 to 5µm; and a maximum particle size *d*ₘₐₓ is 15 to 50µm.

In some embodiments, the S2 further includes: the porous carbon skeleton is in contact with the mixture of the silicon-containing precursor and an oxygen-containing precursor at 200 to 1000°C for 0.1 to 100h, cooling is performed, and then the crushing and/or grading treatment is performed on the obtained material, so as to obtain the nano-silicon-carbon composite material. The oxygen-containing precursor may be introduced simultaneously with the silicon-containing precursor, or may also be alternately introduced with the silicon-containing precursor in an intermittent manner. The introduction of the oxygen-containing precursor may form SiO*ₓ* regions in the silicon nanoparticles, the latter of which forms an effective confinement of the silicon nanoparticles, such that silicon-intercalated lithium expansion is reduced, thereby improving the cycling stability of the composite material electrode. Furthermore, the presence of the SiO*ₓ* may also increase the structural strength of the composite material, thereby further improving its cycling stability.

In order to further buffer the volume effect of the silicon nanoparticles, so as to improve the cycling stability of the composite material electrode, preferably, the oxygen-containing precursor includes, but is not limited to, one or more of a group consisting of O₂, O₃, H₂O, CO₂, methanol, ethanol, isopropanol, and acetone.

In some embodiments, the S2 further includes: the porous carbon skeleton is in contact with the mixture of the silicon-containing precursor and a carbon-containing precursor at 200 to 1000°C for 0.1 to 100h, cooling is performed, and then the crushing and/or grading treatment is performed on the obtained material, so as to obtain the nano-silicon-carbon composite material. The introduction of the carbon-containing precursor may form Si-C-Si bonding regions in the silicon nanoparticles, the latter of which forms an effective confinement of the silicon nanoparticles, and the carbon layer structure may also further buffer silicon-intercalated lithium expansion, such that silicon-intercalated lithium expansion is reduced, thereby improving the cycling stability of the composite material electrode. Furthermore, the presence of Si-C-Si may also increase the structural strength of the composite material, thereby further improving its cycling stability.

In order to further buffer the volume effect of the silicon nanoparticles, so as to improve the cycling stability of the composite material electrode, preferably, the carbon-containing precursor includes, but is not limited to, one or more of a group consisting of methane, ethane, ethylene, acetylene, propane, propylene, and propargyl.

In some embodiments, the preparation of the nano-silicon-carbon composite material further includes the S3, which is to perform surface coating on the nano-silicon-carbon composite material obtained in the S2. The surface coating layer may further improve the electrochemical performance of the nano-silicon-carbon composite material. A material of the surface coating layer includes, but is not limited to, one or several of a solid electrolyte, a conducting polymer, a carbonaceous material, metal, alloy, and a metallic oxide. In some embodiments, the surface coating layer includes, but is not limited to, one or more of lithium hydroxide, lithium carbonate, lithium fluoride, lithium phosphate, lithium metaphosphate, aluminum dihydrogen phosphate, lithium metaaluminate, lithium aluminum phosphate, aluminum phosphate, aluminum metaphosphate, aluminum oxide, aluminum oxide monohydrate, aluminum oxide trihydrate, aluminum hydroxide, alumina sol, aluminium isopropoxide, magnesium oxide, magnesium hydroxide, zinc oxide, zinc hydroxide, titanium oxide, zirconium oxide, lithium phosphorus oxynitride (LiPON), lithium lanthanum zirconium oxide (LLZO), lithium aluminum titanium phosphate (LATP), lithium lanthanum titanium oxide (LLTO), and a lithium germanium phosphorus sulfur compound; and/or one or more of polymers such as polyethylene oxide, carboxymethyl cellulose, polyacrylic acid, and polyacrylonitrile, and lithium complex thereof; and one or more of an LISICON-type solid electrolyte, an NASICION-type solid electrolyte, a perovskite-type solid electrolyte, a garnet-type solid electrolyte, and a sulfide solid electrolyte. The surface coating treatment uses a coating means commonly used in the art, such as Chemical Vapor Deposition (CVD) coating, Atomic Layer Deposition (ALD) coating, sol-gel coating, or hydrothermal/solvent-thermal coating, etc., and the specific steps are not described again in the present disclosure. The thickness of the surface coating layer is 0.2 to 500nm. For example, the thickness of the surface coating layer may, but is not limited to, 0.5nm, 5nm, 10nm, 20nm, 30nm, 50nm, 100nm, 150nm, 200nm, 250nm, 300nm, 400nm, or the like. In some embodiments, the thickness of the surface coating layer may be 0.2 to 20nm, 10 to 100nm, 100 to 300nm, 200 to 500nm, or the like.

### III, Negative electrode

Another typical implementation of the present disclosure provides a negative electrode. The negative electrode includes any one of the above nano-silicon-carbon composite materials or a nano-silicon-carbon composite material obtained by any one of the above preparation methods.

### IV, Battery

Another typical implementation of the present disclosure provides a battery. The battery includes a position electrode and a negative electrode. The negative electrode includes any one of the above nano-silicon-carbon composite materials or a nano-silicon-carbon composite material obtained by any one of the above preparation methods. In some embodiments of the present disclosure, the battery is a lithium ion secondary battery. It may be understood that, the nano-silicon-carbon composite material provided in the present disclosure may also be applied to other types of batteries, which is not limited thereto and is likewise within the scope of protection of the present disclosure.

In order to better understand the above technical solutions, the above technical solutions will be described in detail below with reference to the drawings of the specification and specific implementations.

### Embodiment 1

S1, coal tar pitch was heated to 800°C at 2°C/min in a N₂ atmosphere and maintained for 2h; and the obtained material was crushed and graded, then mixed with KOH based on m(KOH):m(C)=1:2, and activated for 2h at 800°C, so as to obtain a porous carbon skeleton.

S2, the porous carbon skeleton obtained in the S1 was placed in an atmosphere furnace, and the temperature was heated from room temperature to 600°C at 2°C/min in the N₂ atmosphere; 600°C was maintained for 30h in a 20%SiH₄-N₂ mixed atmosphere; natural cooling was performed under N₂ protection; and crushing and grading were performed to obtain a nano-silicon-carbon composite material with a median particle size *d*₅₀ being 8.5µm.

### Embodiment 2

S1, sucrose was heated to 800°C at 2°C/min in a N₂ atmosphere and maintained for 2h, the temperature was heated to 900°C in a 20%CO₂-N₂ mixed atmosphere and maintained for 2h, and the obtained material was crushed and graded to obtain a porous carbon skeleton.

S2, compared with S2 in Embodiment 1, a difference lied in that, a median particle size *d*₅₀ of a nano-silicon-carbon composite material obtained after crushing and grading was 7.9µm.

### Embodiment 3

S1, petroleum coke was heated to 800°C and maintained for 2h in a N₂ atmosphere; and the obtained material was crushed and graded, then mixed with K₂CO₃ based on m(K₂CO₃):m(C)=1:4, and activated for 2 h at 900°C, so as to obtain a porous carbon skeleton.

S2, compared with S2 in Embodiment 1, a difference lied in that, a median particle size *d*₅₀ of a nano-silicon-carbon composite material obtained after crushing and grading was 9.2µm.

### Embodiment 4

S1, sucrose and melamine were mixed and ground based on a mass ratio of 10:1, then heated to 800°C at 2°C/min in a N₂ atmosphere and maintained for 5h, the temperature was heated to 900°C in water vapor and maintained for 2h, and the obtained material was crushed and graded to obtain a porous carbon skeleton.

S2, the porous carbon skeleton particles obtained in the S1 were placed in an atmosphere furnace, and the temperature was heated from room temperature to 300°C at 2°C/min in the N₂ atmosphere; 300°C was maintained for 20h in a 20%Si₂H₆-N₂ mixed atmosphere; natural cooling was performed under N₂ protection; and the obtained material was crushed and graded to obtain a nano-silicon-carbon composite material with a median particle size *d*₅₀ being 8.8µm.

### Embodiment 5

S1, cellulose and phytic acid were mixed based on a mass ratio of 10:1, heated to 800°C at 2°C/min in a N₂ atmosphere and maintained for 2h; and the obtained material was crushed and graded, then mixed with KOH based on m(KOH):m(C)=1:5, and activated for 2h at 800°C, so as to obtain a porous carbon skeleton.

S2, compared with S2 in Embodiment 4, differences lied in that, a deposition temperature was changed to 500°C, and a duration was 15h; and a median particle size *d*₅₀ of a nano-silicon-carbon composite material obtained after crushing and grading was 6.8µm.

### Embodiment 6

S1, cellulose was heated to 800°C at 2°C/min in a N₂ atmosphere and maintained for 2h; and the obtained material was crushed and graded, then mixed with KOH based on m(KOH):m(C)=1:3, and activated for 2h at 800°C, so as to obtain a porous carbon skeleton.

S2, compared with S2 in Embodiment 1, differences lied in that, a volume concentration of SiH₄ in a SiH₄-N₂ mixed gas was changed to 30%, a deposition temperature was 700°C, and a duration was 18h; and a median particle size *d*₅₀ of a nano-silicon-carbon composite material obtained after crushing and grading was 6.7µm.

### Embodiment 7

S1, cellulose was heated to 900°C at 2°C/min in a N₂ atmosphere and maintained for 2h; and the obtained material was crushed and graded, then uniformly mixed with a KOH solution based on m(KOH):m(C)=1:2, stirring was performed at 90°C until a solvent was completely evaporated, and the mixture was dried and then placed in an atmosphere furnace, and activated for 2h at 800°C, so as to obtain a porous carbon skeleton.

S2, compared with S2 in Embodiment 1, a difference lied in that, a median particle size *d*₅₀ of a nano-silicon-carbon composite material obtained after crushing and grading was 7.1µm.

### Embodiment 8

S1, coal tar pitch was heated to 800°C at 2°C/min in a N₂ atmosphere and maintained for 2h, and maintained for 2h at 1000°C in water vapor; the obtained material was crushed and graded, then dispersed in a 0.1MAI(NO₃)₃ aqueous solution; ultrasonic and stirring were performed, and excess liquid was filtered; drying was performed in a 80°C oven, and sintering was performed for 2h at 400°C in the N₂ atmosphere, so as to obtain a porous carbon skeleton.

S2, compared with S2 in Embodiment 1, a difference lied in that, a median particle size *d*₅₀ of a nano-silicon-carbon composite material obtained after crushing and grading was 6.9µm.

### Embodiment 9

Compared with Embodiment 1, a difference lied in that, S3 was further included.

S3, the nano-silicon-carbon composite material obtained in S2 was placed in a high temperature furnace, heated to 800°C at 2°C/min in a N₂ atmosphere, and maintained for 0.5h in a 50%C₂H₂-N₂ mixed gas, so as to obtain a carbon coated nano-silicon-carbon composite material; and a thickness of a carbon coating layer was 10nm.

### Embodiment 10

Compared with Embodiment 1, a difference lied in that, S3 was further included.

S3, the obtained nano-silicon-carbon composite material particles were dispersed in a 5% Al(NO₃)₃ aqueous solution, ultrasonic and stirring were performed, and excess liquid was filtered; drying was performed in an 80°C oven, and sintering was performed for 2h at 400°C in the N₂ atmosphere, so as to obtain an Al₂O₃ coated nano-silicon-carbon composite material; and a thickness of the Al₂O₃ coating layer was 5nm.

### Embodiment 11

Compared with Embodiment 1, a difference lied in that, S3 was further included.

S3, the nano-silicon-carbon composite material obtained in S2 was added to a LiPO₃ aqueous solution with a mass concentration being 1.5wt%, well mixed, and then subjected to spray drying, so as to obtain a nano-silicon-carbon composite material with a surface containing an LiPO₃ coating layer; and a thickness of the LiPO₃ coating layer was 5nm.

### Embodiment 12

Compared with Embodiment 1, a difference lied in that, oxygen was also introduced in S2.

S2, the porous carbon skeleton obtained in S1 was placed in an atmosphere furnace, and the temperature was heated from room temperature to 600°C at 2°C/min in the N₂ atmosphere; 600°C was maintained for 30h in a 20%SiH₄-0.01%O₂-N₂ mixed atmosphere; natural cooling was performed under N₂ protection; and crushing and grading were performed to obtain a nano-silicon-carbon composite material with a median particle size *d*₅₀ being 8µm.

### Embodiment 13

Compared with Embodiment 1, a difference lied in that, carbon dioxide was also introduced in S2.

S2, the porous carbon skeleton obtained in S1 was placed in an atmosphere furnace, and the temperature was heated from room temperature to 600°C at 2°C/min in the N₂ atmosphere; the atmosphere was changed to a 20%SiH₄-N₂ mixed gas; in the 20%SiH₄-N₂ mixed gas atmosphere, the temperature was maintained for 2h at 600°C, and silicon deposition was performed; then the atmosphere was changed to N₂, the temperature was cooled to 200°C, and the atmosphere was changed to a 1%CO₂-N₂ mixed gas; in the 1%CO₂-N₂ mixed gas atmosphere, an oxygen-containing treatment was performed for 12min at 200°C; then the atmosphere was changed to N₂ and heated to 600°C, then the silicon deposition-oxygen-containing treatment was performed for 15 cycles on the porous carbon skeleton, and naturally cooled under N₂ protection; and then crushing and grading were performed to obtain a nano-silicon-carbon composite material with a median particle size *d*₅₀ being 8µm.

### Embodiment 14

Compared with Embodiment 1, a difference lied in that, acetylene was also introduced in S2.

S2, the porous carbon skeleton obtained in S1 was placed in an atmosphere furnace, and the temperature was heated from room temperature to 600°C at 2°C/min in the N₂ atmosphere; 600°C was maintained for 30h in a 20%SiH₄-0.1%C₂H₂-N₂ mixed atmosphere; natural cooling was performed under N₂ protection; and then crushing and grading were performed to obtain a nano-silicon-carbon composite material with a median particle size *d*₅₀ being 10µm.

### Embodiment 15

Compared with Embodiment 1, a difference lied in that, ethylene was also introduced in S2.

S3, the porous carbon skeleton obtained in S1 was placed in an atmosphere furnace, and the temperature was heated from room temperature to 600°C at 2°C/min in the N₂ atmosphere; 600°C was maintained for 30h in a 20%SiH₄-0.1%C₂H₄-N₂ mixed atmosphere; natural cooling was performed under N₂ protection; and then crushing and grading were performed to obtain a nano-silicon-carbon composite material with a median particle size *d*₅₀ being 10µm.

### Comparative Example 1

S1, cellulose was heated to 800°C at 2°C/min in a N₂ atmosphere and maintained for 2h; and the obtained material was crushed and graded, so as to obtain a porous carbon skeleton.

S2, compared with S2 in Embodiment 1, a difference lied in that, a median particle size *d*₅₀ of a nano-silicon-carbon composite material obtained after crushing and grading was 8.9µm.

### Comparative Example 2

S1, carbon black was heated to 1000°C at 2°C/min in a N₂ atmosphere and maintained for 2h; 800°C was maintained for 10h in water vapor; and the obtained material was crushed and graded to obtain a porous carbon skeleton.

S2, compared with S2 in Embodiment 1, a difference lied in that, a median particle size *d*₅₀ of a nano-silicon-carbon composite material obtained after crushing and grading was 4.8µm.

### Preparation and Electrochemical Performance Test for Electrode and Half Battery:

The nano-silicon-carbon composite materials prepared in Embodiments 1-11 and the silicon-carbon composite materials prepared in Comparative Examples 1 and 2 were used as negative electrode active substance to prepare negative electrode plates, respectively; and the negative electrode plates were used to prepare a CR2032-type button battery by using a conventional method, and the battery was subjected to an electrical performance test. The specific test method included the following operations.
(1) Half battery assembly: the CR2032-type button battery was assembled in a glove box, a lithium metal sheet was used as a counter electrode, a polypropylene microporous membrane was used as a separator membrane, and electrolyte was a solution by dissolving LiPF₆ in a mixture of ethyl carbonate (EC) and diethyl carbonate (DEC) (volume ratio being EC:DEC=1:1), where a concentration of the LiPF₆ was 1mol/L.

A charge-discharge test was performed on the battery by using a LAND battery test system.

(2) Cyclic gram capacity and initial coulombic efficiency test: the CR2032-type button battery was stood for 6h, then was discharged to 0.005V at 0.05C, and then discharged to 0.005V at 0.01C; after 5min of standing, the battery was charged to 1.5V at a constant current of 0.05C; and a first lithium deintercalation gram capacity was a gram capacity (or referred to as mass specific capacity) of an electrode material, and a ratio of a first lithium deintercalation capacity to a first lithium intercalation capacity was the initial coulombic efficiency of the battery.

### Full Battery Preparation and Electrochemical Performance Test:

The nano-silicon-carbon composite materials prepared in Embodiments 1-11 and the silicon-carbon composite materials prepared in Comparative Examples 1 and 2 were used as negative electrode active substances, and the electrode plates including the negative electrode active substances were used to prepare a soft pack battery by using a conventional method, and electrical performance was performed. The soft pack battery was prepared in a dehumidified room with a dew point of -45°C. A charge-discharge cycle stability test was performed on the battery by using an LANBTS battery test system, and the specific test method included the following operations.
(1) Preparation of positive electrode plate: a positive active substance LiCoO₂, a conductive agent Super P, an adhesive PVDF, and a solvent NMP were stirred and mixed well according to a mass ratio of 92:3:5:150, then uniformly coated on a positive electrode current collector, and then dried at 80°C, so as to obtain a positive electrode plate.
(2) Preparation of negative electrode plate: a negative active substance, a conductive agent Super P, an adhesive polyacrylic acid, and a solvent deionized water were stirred and mixed well according to a mass ratio of 95:1:4:120, then uniformly coated on a negative electrode current collector, and then dried at 100°C, so as to obtain a negative electrode plate.
(3) The positive electrode plate and the negative electrode plate were stacked through a square and isolated from each other by using a polypropylene separator membrane so as to prepare into a battery cell, and packaged in an aluminum-plastic bag; and electrolyte with the corresponding capacity was filled in the aluminum-plastic bag, and was vacuum-sealed to obtain the soft pack battery. The electrolyte was a mixture of EC of LiPF₆ and DEC, where the concentration of the LiPF₆ was 1mol/L, and the volume ratio of EC to DEC was 1:1.
(4) Formation and capacity sorting: after liquid injection and sealing, the battery starts to be formed, stood for 12h in a 25°C incubator, then charged to 3.3V at a constant current of 0.02C, stood for 30min, charged to 3.8V at a constant current of 0.025C, stood for 10min, and charged to 4.2V at a constant current of 0.33C; the formed battery was subjected to vacuum pumping and air bag cutting, then subjected to capacity sorting, charged to 4.45V at a constant current of 0.33C, stood for 10min, discharged to 3V at a constant current of 1C, stood for 10min, and discharged to 3V at the constant current of 0.33C, until capacity sorting was completed. A ratio of a discharging capacity of the soft pack battery during formation and capacity sorting divided by a charging capacity was the initial coulombic efficiency of the battery.
(5) 25°C cycle stability test: the battery was placed in the 25°C incubator, charged to 4.45V at a constant current of 1C, then charged with a constant voltage of 4.45V to a current of 0.1C, stood for 10min, then discharged to 3.0V at a constant current of 1C, and stood for 10min. The above charging and discharging steps were repeated and stopped until a discharging capacity was lower than 80% of the discharging capacity for the first cycle, in this case, the number of cycles obtained was the cycle life of the soft pack battery; and a capacity retention rate of 100 cycles was recorded.
(6) 45°C cycle stability test: the battery was placed in a 45°C incubator, and other steps were the same as the 25°C cycle stability test.

The results for basic physical properties and electrochemical performance tests of the above nano-silicon-carbon composite materials prepared in Embodiments 1-11 and the silicon-carbon composite materials prepared in Comparative Examples 1 and 2 were shown in Table 1 and Table 2.

**Table 1 Physical properties of the nano-silicon-carbon composite materials obtained in Embodiments 1-11 and silicon-carbon composite materials obtained in Comparative Examples 1 and 2**

| Item | Silicon content (wt%) | Carbon content (wt%) | Other element content (wt%) | *A*₁/*A*₀ | Specific surface area (m²/g) | Vₒₚₑₙ pores (cm³/g) | V_{closed pores}/Vₒₚₑₙ pores | V_{closed} micropores/V_{closed} mesopores | True density (g/cm³) |
|---|---|---|---|---|---|---|---|---|---|
| Embodiment 1 | 51.1 | 48.5 | 0.4 | 30% | 8.9 | 0.025 | 0.84 | 0.24 | 1.82 |
| Embodiment 2 | 49.4 | 48.1 | 2.5 | 6% | 5.4 | 0.013 | 0.25 | 0.52 | 1.91 |
| Embodiment 3 | 45.9 | 52.1 | 2.0 | 23% | 6.4 | 0.012 | 0.59 | 0.09 | 1.89 |
| Embodiment 4 | 46.1 | 49.2 | 4.7 | 41% | 5.8 | 0.015 | 2.71 | 1.92 | 1.75 |
| Embodiment 5 | 47.2 | 49.5 | 3.3 | 47% | 7.1 | 0.019 | 3.65 | 3.15 | 1.64 |
| Embodiment 6 | 52.1 | 46.6 | 1.3 | 42% | 8.8 | 0.024 | 4.22 | 2.67 | 1.52 |
| Embodiment 7 | 51.5 | 45.2 | 3.3 | 35% | 9.7 | 0.039 | 0.18 | 0.90 | 1.88 |
| Embodiment 8 | 50.2 | 45.1 | 4.7 | 12% | 11.2 | 0.042 | 1.15 | 0.18 | 1.69 |
| Embodiment 9 | 46.5 | 51.2 | 2.3 | 36% | 1.5 | 0.005 | 8.19 | 0.29 | 1.72 |
| Embodiment 10 | 49.3 | 45.8 | 4.9 | 31% | 2.3 | 0.006 | 6.75 | 0.15 | 1.71 |
| Embodiment 11 | 48.9 | 46.5 | 4.6 | 29% | 1.9 | 0.0045 | 9.31 | 0.12 | 1.71 |
| Embodiment 12 | 49.5 | 48.2 | 2.3 | 29% | 3.5 | 0.008 | 2.00 | 0.23 | 1.81 |
| Embodiment 13 | 48.9 | 48.1 | 3.0 | 30% | 3.2 | 0.008 | 1.75 | 0.21 | 1.82 |
| Embodiment 14 | 50.1 | 49.6 | 0.3 | 38% | 4.3 | 0.009 | 2.00 | 0.22 | 1.84 |
| Embodiment 15 | 49.8 | 49.8 | 0.4 | 35% | 4.8 | 0.010 | 1.90 | 0.25 | 1.83 |
| Comparative Example 1 | 35.9 | 60.9 | 3.2 | 0 | 5.2 | 0.011 | 0.09 | 0 | 1.70 |
| Comparative Example 2 | 31.8 | 66.7 | 1.5 | 0 | 0.8 | 0.002 | 0 | 0 | 1.93 |

**Table 2 Electrochemical performance of the nano-silicon-carbon composite materials obtained in Embodiments 1-11 and silicon-carbon composite materials obtained in Comparative Examples 1 and 2**

| Item | Half battery | | Full battery |
|---|---|---|---|
| | Gram capacity (mAh/g) | Initial coulombic efficiency (%) at 1.5 V | Capacity retention rate (%) of 100 cycles at 25°C |
| Embodiment 1 | 1982 | 93.2 | 96.7 |
| Embodiment 2 | 1856 | 92.9 | 94.5 |
| Embodiment 3 | 1821 | 92.5 | 95.9 |
| Embodiment 4 | 1743 | 92.8 | 97.8 |
| Embodiment 5 | 1852 | 92.3 | 98.2 |
| Embodiment 6 | 1969 | 92.1 | 98.0 |
| Embodiment 7 | 1958 | 91.9 | 96.8 |
| Embodiment 8 | 1867 | 91.4 | 95.5 |
| Embodiment 9 | 1802 | 93.5 | 97.5 |
| Embodiment 10 | 1846 | 93.8 | 97.2 |
| Embodiment 11 | 1899 | 94.2 | 97.0 |
| Embodiment 12 | 1885 | 92.8 | 97.5 |
| Embodiment 13 | 1852 | 92.5 | 97.8 |
| Embodiment 14 | 1920 | 93.1 | 97.2 |
| Embodiment 15 | 1911 | 93.4 | 97.6 |
| Comparative Example 1 | 1422 | 85.5 | 88.6 |
| Comparative Example 2 | 1319 | 89.1 | <80 |

From Table 1 and Table 2, it might be seen that, compared to the silicon-carbon composite materials prepared in the comparative example, the nano-silicon-carbon composite materials prepared in the embodiments of the present disclosure all included silicon nanoparticles, ultra-large interlayer spacing turbostratic graphite, and closed micropores. When being applied to lithium ion secondary batteries, the nano-silicon-carbon composite materials prepared in the embodiments of the present disclosure had a higher gram capacity and higher initial coulombic efficiency, with a significantly improved capacity retention rate, and showed excellent electrochemical performance.

The gram capacity in Embodiment 1 reached 1982mAh/g, the initial coulombic efficiency was 93.2%, and the capacity retention rate of the full battery reached 96.7% for 100 cycles at 25°C and 1C/1C. Embodiments 2 and 3 used different carbon precursor materials and activation methods, and the nature of the obtained porous carbon skeleton led to a low proportion of the obtained nano-silicon-carbon composite material with an ultra-large interlayer spacing, and thus the cycling stability was slightly reduced, and the capacity retention rate of 100 cycles was 94.5% and 95.9%, respectively. Furthermore, due to the nature of the pore structure of the porous carbon skeleton used, the gram capacities of Embodiments 2 and 3 were also reduced. In Embodiment 8, a thin layer Al₂O₃ was loaded on carbon particles, the silicon content of the composite material was reduced, the content of the ultra-large interlayer spacing turbostratic graphite was also reduced, and the gram capacity and 100-cycle capacity retention rate both were reduced.

In Embodiments 4-6, through elemental doping and/or stronger activation of the carbon material, the prepared nano-silicon-carbon composite material had a high content of the ultra-large interlayer spacing turbostratic graphite (*A*₁/*A*₀); at the same time, by adjusting the type, concentration and deposition temperature of the silicon-containing precursor, the obtained composite material had abundant closed micropores, and the capacity retention rate of the full battery including the composite material electrode after 100 cyclic charge-discharge cycles was greater than or equal to 97.8%. The ultra-large interlayer spacing turbostratic graphite and the closed micropores had certain dynamic lithium storage properties, lithium storage-lithium releasing was repeated in an electrochemical cycle, so as to provide a long-lasting lithium storage mechanism, thereby improving the cycling stability of the battery, which was manifested by such phenomenon during cycling: the emergence of 1 to 2 cycles every 5 to 10 cycles, and the cycling efficiency of a battery is greater than 100%, such that the cycling stability of the battery was significantly improved over the usual cycling process in which the cycling efficiency was below 100%. It was to be noted that, as in Embodiments 4 and 5, due to the introduction of a certain proportion of doping elements, the silicon content was reduced compared to Embodiment 1, such that the gram capacity was reduced. In Embodiment 7, *A*₁/*A*₀ was reduced compared to Embodiment 6; meanwhile, due to the use of the same silicon-containing deposition conditions as in Embodiment 1, the volume of the closed micropores was closer to that in Embodiment 1, such that the gram capacity retention rate of 100 cycles was reduced compared to Embodiment 6, which was close to that in Embodiment 1, at 96.8%.

In Embodiments 9-11, the obtained nano-silicon-carbon composite material had a surface coating layer compared to Embodiments 4-6, with a smaller specific surface area and open pore volume, such that the initial coulombic efficiency of the electrode was significantly improved, reaching more than 93%. In another aspect, the composite material also had a high proportion of closed pores, but the content of the closed micropores in the closed pores was relatively low, the cycling stability of the composite material electrode was reduced compared to that in Embodiments 4-6, but still remained above 97%.

In the composite material obtained in Embodiments 12 and 13, due to the introduction of a very small amount of the oxygen-containing precursor, SiO*ₓ* regions were formed in the silicon nanoparticles, such that silicon-intercalated lithium expansion might be effectively alleviated, and the structural stability of the material might be improved, thereby improving the cycling stability of the composite material in lithium ion batteries. However, due to the presence of oxygen atoms, the gram capacity and initial coulombic efficiency of the composite material were reduced. In the composite material in Embodiments 14 and 15, due to the introduction of hydrocarbon substances, Si-C-Si regions were formed in the silicon nanoparticles, such that silicon-intercalated lithium expansion might be effectively alleviated, thereby improving the cycling stability of the composite material in lithium ion batteries. Therefore, the composite material obtained in Embodiments 12-15 all had a high 100-cycle capacity retention rate.

The silicon contents in the composite materials obtained in Comparative Examples 1 and 2 were low, and the gram capacities were less than 1450mAh/g. More importantly, since both the composite materials did not include the ultra-large interlayer spacing turbostratic graphite or closed micropores, the electrodes containing the composite materials had poor cycling stability, and are worse after 100 charge-discharge cycles. The capacity retention rate of the composite material obtained in Comparative Example 1 was only 88.6%, and the capacity retention rate of the composite material obtained in Comparative Example 2 was less than 80%, and the battery failed.

Fig. 8 shows cycling performance test results of a full battery including an electrode of a nano-silicon-carbon composite material obtained in Embodiment 1 and a full battery including an electrode of a nano-silicon-carbon composite material obtained in Comparative example 1. It might be seen that, the capacity retention rate of the full battery including the electrode of the nano-silicon-carbon composite material obtained in Embodiment 1 after 100 charge-discharge cycles was 96.7%, and the capacity retention rate of the full battery including the electrode of the silicon-carbon composite material obtained in Comparative Example 1 after 100 charge-discharge cycles was only 88.6%.

The above are only the preferred embodiments of the present disclosure and are not intended to limit the present disclosure. For those skilled in the art, the present disclosure may have various modifications and variations. Any modifications, equivalent replacements, improvements and the like made within the spirit and principle of the present disclosure all fall within the scope of protection of the present disclosure.

## Claims

1. A nano-silicon-carbon composite material, comprising silicon nanoparticles, closed pores, and a turbostratic graphite three-dimensional network structure, wherein
the closed pores have a pore volume inaccessible to N₂, and the closed pores comprising closed micropores;
the turbostratic graphite three-dimensional network structure comprising ultra-large interlayer spacing turbostratic graphite, and an interlayer spacing of the ultra-large interlayer spacing turbostratic graphite is 0.40 to 0.55nm; and
the silicon nanoparticles and the closed pores are dispersed in the turbostratic graphite three-dimensional network structure.

2. The nano-silicon-carbon composite material according to claim 1, wherein a size of the silicon nanoparticles is 0.5 to 20nm; preferably, the size of the silicon nanoparticles is 0.5 to 2nm; and more preferably, the silicon nanoparticles is amorphous silicon.

3. The nano-silicon-carbon composite material according to claim 1 or 2, wherein a volume content of the ultra-large interlayer spacing turbostratic graphite in the turbostratic graphite three-dimensional network structure is 10% to 50%.

4. The nano-silicon-carbon composite material according to any one of claims 1 to 3, wherein a stacking size *L*_{c} of the ultra-large interlayer spacing turbostratic graphite in a c-axis direction is 0.4 to 2nm; and/or
a size *L*ₐ of the ultra-large interlayer spacing turbostratic graphite in an *a*-axis direction is 2 to 10nm.

5. The nano-silicon-carbon composite material according to any one of claims 1 to 4, wherein the turbostratic graphite three-dimensional network structure in the nano-silicon-carbon composite material has a high degree of disordering, and by using a Raman test method, *I*_{D}/*I*_{G} of the nano-silicon-carbon composite material is 0.5 to 5.0.

6. The nano-silicon-carbon composite material according to any one of claims 1 to 5, wherein a specific surface area of the nano-silicon-carbon composite material is 0.1 to 50m²/g, a volume of open pores is 0.001 to 0.05cm³/g, and the volume of the open pores is a pore volume accessible to N₂.

7. The nano-silicon-carbon composite material according to any one of claims 1 to 6, wherein in the nano-silicon-carbon composite material, a ratio of the pore volume of the closed pores to the volume of the open pores is 0.1 to 5.

8. The nano-silicon-carbon composite material according to any one of claims 1 to 7, wherein the closed pores further comprising closed mesopores, and a ratio of a volume of the closed micropores to a volume of the closed mesopores is 0.05 to 5.

9. The nano-silicon-carbon composite material according to claim 1, comprising SiOₓ, wherein x is 0 to 2.

10. The nano-silicon-carbon composite material according to claim 1, wherein a content of silicon in the nano-silicon-carbon composite material is 5 to 95wt%.

11. The nano-silicon-carbon composite material according to claim 1 or 2, wherein silicon and carbon in the nano-silicon-carbon composite material are dispersed at a nanometer scale.

12. The nano-silicon-carbon composite material according to any one of claims 1, 2 and 10,
wherein the silicon nanoparticles are obtained through chemical vapor deposition of a silicon-containing precursor on the turbostratic graphite three-dimensional network structure at 150 to 1000°C; and preferably, the silicon-containing precursor is selected from one or more of monosilane, disilane, trisilane, halogenated silane, polysilane, silole and a derivative thereof, and silafluorene and a derivative thereof.

13. The nano-silicon-carbon composite material according to claim 1, wherein the turbostratic graphite three-dimensional network structure is derived from a carbon material, and the carbon material comprising, but is not limited to: hard carbon, graphite, amorphous carbon, graphene, a carbon material prepared by a polymer precursor through pyrolysis and/or activation, a carbon material prepared by a biomass precursor through pyrolysis and/or activation, and a carbon material prepared by a fossil carbon source through pyrolysis and/or activation; and
preferably, the carbon material for preparing the turbostratic graphite three-dimensional network structure comprising one or more of N, P, S, and B.

14. The nano-silicon-carbon composite material according to claim 13, wherein the turbostratic graphite three-dimensional network structure is obtained after activation of the carbon material, and an activation method comprising, but is not limited to: contacting the carbon material with one or more of H₂O, CO₂, O₂, and O₃ at a high temperature, and/or mixing the carbon material with one or more of NaOH, KOH, Na₂CO₃, K₂CO₃, potassium acetate, Na₂O, K₂O, Na₂O₂, K₂O₂, Na₂O, K₂O, H₃PO₄, and ZnCl₂, and then performing a high-temperature treatment in an inert gas.

15. The nano-silicon-carbon composite material according to claim 1, comprising a surface coating layer, wherein a thickness of the surface coating layer is 0.2 to 500nm;
preferably, a material of the surface coating layer is selected from one or several of a solid electrolyte, a conducting polymer, a carbonaceous material, metal, alloy, and a metallic oxide; and
preferably, the surface coating layer is selected from one or more of lithium hydroxide, lithium carbonate, lithium fluoride, lithium phosphate, lithium metaphosphate, aluminum dihydrogen phosphate, lithium metaaluminate, lithium aluminum phosphate, aluminum phosphate, aluminum metaphosphate, aluminum oxide, aluminum oxide monohydrate, aluminum oxide trihydrate, aluminum hydroxide, alumina sol, aluminum isopropoxide, magnesium oxide, magnesium hydroxide, zinc oxide, zinc hydroxide, titanium oxide, zirconium oxide, LiPON, LLZO, LATP, LLTO, and a lithium germanium phosphorus sulfur compound; and/or one or more of polyethylene oxide, carboxymethyl cellulose, polyacrylic acid, polyacrylonitrile, and lithium complex thereof; and/or one or more of an LISICON-type solid electrolyte, an NASICION-type solid electrolyte, a perovskite-type solid electrolyte, a garnet-type solid electrolyte, and a sulfide solid electrolyte.

16. The nano-silicon-carbon composite material according to claim 1, wherein a true density of the nano-silicon-carbon composite material obtained according to a helium specific gravity method is 1.2 to 2.1g/cm³.

17. A method for preparing a nano-silicon-carbon composite material, wherein the preparation method specifically comprising:
S1, providing a porous carbon skeleton, wherein the porous carbon skeleton is a three-dimensional network structure that is formed by a turbostratic graphite structure, closed micropores are comprised, the porous carbon skeleton comprising ultra-large interlayer spacing turbostratic graphite, and an interlayer spacing of the ultra-large interlayer spacing turbostratic graphite is 0.40 to 0.55nm;
S2, contacting the porous carbon skeleton in the S1 with a silicon-containing precursor at 200 to 1000°C for 0.1 to 100h, performing a cooling, and then performing a crushing and/or a grading treatment on an obtained material, so as to obtain the nano-silicon-carbon composite material; and
optionally, S3, performing a surface coating on the nano-silicon-carbon composite material obtained in the S2.

18. The method for preparing a nano-silicon-carbon composite material according to claim 17, wherein the S2 further comprising: contacting the porous carbon skeleton with a mixture of the silicon-containing precursor and an oxygen-containing precursor at 200 to 1000°C for 0.1 to 100h, performing the cooling, and then performing the crushing and/or the grading treatment on the obtained material, so as to obtain the nano-silicon-carbon composite material; or
the S2 further comprising: contacting the porous carbon skeleton with the mixture of the silicon-containing precursor and a carbon-containing precursor at 200 to 1000°C for 0.1 to 100h, performing the cooling, and then performing the crushing and/or the grading treatment on the obtained material, so as to obtain the nano-silicon-carbon composite material.

19. A negative electrode, comprising the nano-silicon-carbon composite material according to any one of claims 1 to 16 or a nano-silicon-carbon composite material obtained by the preparation method according to claim 17.

20. A battery, comprising a positive electrode and a negative electrode; the negative electrode comprising the nano-silicon-carbon composite material according to any one of claims 1 to 16 or a nano-silicon-carbon composite material obtained by the preparation method according to claim 17; and preferably, the battery is a lithium ion secondary battery.
